# EUROPEAN PATENT SPECIFICATION

(11) **EP 0 493 559 B1**
(45) Date of publication and mention of the grant of the patent: **27.12.1995**
(21) Application number: 91912908.0
(22) Date of filing: 08.07.1991
(51) Int. Cl.: C02F 1/48

(54) **WATER CONDITIONER AND TREATMENT METHOD**
WASSERAUFBEREITUNGSGERÄT UND -VERFAHREN
DISPOSITIF ET PROCEDE DE TRAITEMENT D'EAU

(30) Priority: 11.07.1990 GB 9015224
(43) Date of publication of application: 08.07.1992
(73) Proprietor: STEFANINI, Daniel, Sherwood, Nottingham NG5 4DD (GB)
(72) Inventor: STEFANINI, Daniel, Sherwood, Nottingham NG5 4DD (GB)
(74) Representative: Lally, William
(86) International application number: GB9101119
(87) International publication number: WO9200916

(56) References cited:
- EP-A- 0 338 697
- EP-A- 0 357 102
- DE-A- 3 225 806
- DE-U- 8 913 491

## Description

### Description of Invention

This invention relates to a water conditioner and treatment method.

Water conditioners are well known. They are used to prevent the build-up of hard scale in domestic and commercial hot or cold water systems. Such an effect is achieved by the application of energy to the water in the form of a magnetic or electromagnetic field. The result is that the molecular structure of the salts in the water flowing through the system is altered, manifested by an increase in size of the crystals which remain in suspension of the water and they do not appear to bond together in the same way as they would otherwise. Additionally the crystalline structure of the hard scale which has already been deposited in the pipe work of the system alters, softening it so that the scale dissipates into the water and can pass harmlessly through the system.

Known water conditioners fall into five categories:
1. Having magnets in direct contact with water flowing in the system. These magnets collect magnetic debris present in the water flowing through the device. Build up of debris progressively reduces the effectiveness of the magnets, and such devices are effective in any event only when the water is in motion. Additionally, the build up of debris on the magnets can occlude the pipe and thus reduce the flow of water. Such devices require considerable installation work.
2. In line, by electrolytic effect. This type of conditioner introduces undesirable metals into the water, and as the electrodes are eroded they lose effectiveness and ultimately need replacing. Such a device restricts water flow, and requires considerable installation work.
3. In line, with treatment chemicals introduced into the water system. Such devices need constant replenishment of the chemicals, and also require considerable installation work.
4. In line, having a magnetic field generated by an electromagnet. This type suffers all the drawbacks of the device described in category 1 above, and is more expensive. It also requires considerable installation work.
5. Electronic devices, which produce an electromagnetic field and apply it externally to the system. Such a device produces a constant effect, and is unable to recognise whether water in the system is still or flowing. The effectiveness of the device is therefore limited, since the output of the device cannot vary with water flow. Nevertheless, such devices require little installation work.

A water conditioning device is disclosed in DE-U-8913491. The device disclosed includes a signal generator which produces a series of square pulses at a variable repetition frequency, the pulses being applied to induction coils surrounding a pipe in which water to be treated is flowing. There may be a flow meter which controls the frequency of the pulses.

A further water conditioner is disclosed in EP-0338697A. This discloses a system wherein an electromagnetic signal for treating the liquid has its frequency related to the absorption characteristics of the liquid being treated. The signals are applied to the liquid by probes or liquid contacting surfaces, and the energy absorption by the liquid may be observed and used to control the frequency of the signals applied to the liquid.

It is broadly the object of the present invention to improve upon such known categories of water conditioning devices.

According to the present invention, I provide a water conditioner for electromagnetic treatment of water in a conduit forming part of a water system, comprising and a method using:
one or more boxes, at least one of which is adapted to be connected to a water conduit;
means for establishing electrical contact with the conduit at two or more contact points spaced along the conduit;
a microphone for detecting audio frequency signals due to turbulence of water flowing in the conduit and due to the presence of limescale in the water system;
and a variable power radio frequency signal generator of low impedance, operable in response to said detected signals to transmit an electromagnetic field of variable intensity to the water by way of said contact points.

A water conditioner according to the invention differs from other water conditioners in that it has the capability to apply an amount of energy to treat the water which is related to the flow of water passing through the system and also to the amount of scale already built up within the system.

A water conditioner in accordance with the invention detects audio frequency signals of an amplitude depending on the turbulence of water passing through the water system. The amount of turbulence depends on the rate of flow of the water and the amount of limescale deposited in the system. As the deposits dissipate in the water flowing in the system, the turbulence reduces and thus the level of treatment will be adjusted accordingly.

The frequency of the signal produced by the signal generator is preferably a lower end radio frequency signal, e.g. between 200 and 500 khz.

The water conditioner may be provided with a control which enables the maximum power to be set, enabling tuning of the conditioner to suit an individual installation. A power level meter, e.g. utilising light emitting diodes, may be provided. This may be used to tune the conditioner to a system, by observing the power level while water is flowing, e.g. while the cold water tap is running.

Only a conditioner which utilises an electromagnetic field will produce an effect which propagates throughout the system. It should be appreciated that such propagation will work both with and against the flow of water in the system, so that if there is limescale blockage in a feed pipe this also may be treated.

The radio frequency signal is applied to the conduit in such a way that the section of conduit to which the conditioner is connected forms an electromagnetic loop, thereby inducing a propagating electromagnetic field in the water. If the conduit is a plastics pipe, copper foil may be wrapped around the pipe so that the effect is the same.

The invention will now be described by way of example with reference to the accompanying drawings, of which:-
Figure 1 shows diagrammatically an electrical circuit diagram of the water conditioner;
Figure 2 shows the connection of a box to a water pipe.

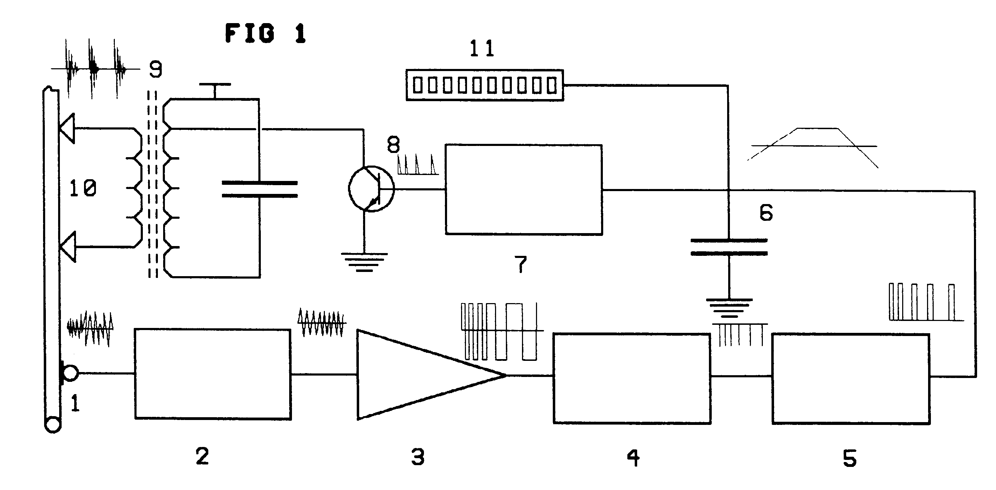

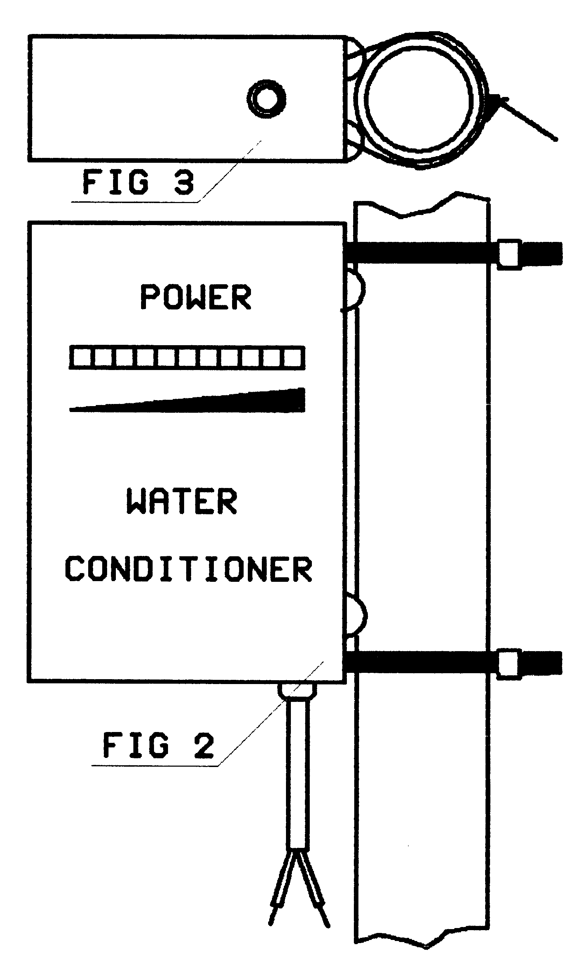

Referring firstly to Figure 1 of the drawings, the elements of the electrical circuit there illustrated are as follows, identified by the reference numerals appearing on the drawings:
1. Microphone connected to the box, the microphone being in physical contact with the water pipe to pick up any sound generated as a result of turbulence due to water flowing in the pipe. Turbulence is generated by water flowing at the surface of the pipe, as well as over obstructions in the pipe such as limescale deposits therein.
2. Adjustable filter which filters, from the signal provided by the microphone, sounds not related to the sound generated by water passing through the pipe.
3. Differential amplifier used to amplify the signal after the filter 2, in preparation for pulse shaping. The amplifier is controllable by an outside control to set the correct power level for the installation concerned.
4. Pulse shaping network and differentiator. This converts the frequency into shaped pulses which relate to the frequency of the signal.
5. Monostable circuit to convert variable frequency pulses into a square wave of variable frequency.
6. Averaging circuit converting the square wave signal to a voltage which relates to the frequency of the square wave. The averaging circuit may be adjustable by external control to determine the power level for an individual installation.
7. Variable frequency astable circuit, to convert the voltage signal from the averaging circuit to a variable frequency train of pulses.
8. Power output stage, which converts the pulses to a diminishing sine wave preferably in the frequency range 200 to 500 khz.
9. HF output transformer with adjustable ferrite core, to provide a low impedance output which is fed to the water pipe. The low voltage high current signal induces an electromagnetic field in the water, to provide the descaling action as above described.
10. Connector system which applies a signal from the output transformer to the pipe at points spaced lengthwise of the pipe. As illustrated in Figure 2, this may comprises copper pads on a box in which other components of the conditioner are mounted, there being plastic ties for connecting it to the pipe. Alternatively a spring loaded catch or the like could be provided to wrap around the pipe.
11. A power level indicator may be connected to the averaging circuit 6, the power level indicator comprising, for example, ten light emitting diodes arranged to form a bar graph or moving dot effect to give a visual indication of power output.

As above referred to, Figure 2 shows how a conditioner in accordance with the invention may be attached to a pipe by plastics ties embracing the pipe, the electrical connection to the pipe for the output signal from the conditioner being applied at contact pads spaced lengthwise of the pipe. The conditioner of Figure 2 includes a power level indicator comprising an array of light-emitting diodes as above referred to.

It will be appreciated that some of the elements above described of the electrical circuit may be omitted whilst still producing the same general effect in water to be treated. The elements of the conditioner may be disposed in one or more boxes.

The transfer rate of the electromagnetic field to the water may be strong enough to affect the thermal conductivity of the water, and produce an effect extending throughout a hot water or central heating system. Thus, the efficiency of heat transfer at a boiler and radiators may be increased resulting in energy saving. The thermal conductivity of a body of water in a swimming pool may be increased.

## Claims

1. A water conditioner for electromagnetic treatment of water in a conduit forming part of a water system, comprising
one or more boxes, at least one of which is adapted to be connected to a water conduit;
means for establishing electrical contact with the conduit at two or more contact points spaced along the conduit;
a microphone (1) for detecting audio frequency signals due to turbulence of water flowing in the conduit and due to the presence of limescale in the water system;
and a variable power radio frequency signal generator (2-10) of low impedance, operable in response to said detected signals to transmit an electromagnetic field of variable intensity to the water by way of said contact points.

2. A water conditioner according to Claim 1 further characterised by a filter (2) which filters, from the signal provided by the microphone, sounds not related to the sound generated by turbulence of water in the conduit.

3. A water conditioner according to Claim 2 further characterised by an amplifier (3) for amplifying the signal from the filter in preparation for pulse shaping.

4. A water conditioner according to Claim 3 further characterised by a pulse shaping network and differentiator (4) to convert the signal from the amplifier into a train of pulses of frequency relating to the frequency of the signal.

5. A water conditioner according to Claim 4 further characterised by a monostable circuit (5) for converting the variable frequency train of pulses into a variable frequency square wave.

6. A water conditioner according to Claim 5 further characterised by an averaging circuit (6) for converting said square wave signal to a voltage relating to the frequency of the square wave signal.

7. A water conditioner according to Claim 6 further characterised by a variable frequency astable circuit (7) to convert the voltage from the averaging circuit to a variable frequency train of pulses.

8. A water conditioner according to Claim 7 further characterised by a power output stage (8) for providing a diminishing sine wave signal output.

9. A water conditioner according to Claim 8 further characterised by an HF output transformer for providing a low voltage high current output signal to be applied to the conduit.

10. A water conditioner according to Claim 6 or any claim appendant thereto further characterised by a power level indicator (11) connected to the averaging circuit.

11. A method of electromagnetically treating water in a conduit forming part of a water system, comprising
by means of a microphone, detecting audio frequency signals due to turbulence of water flowing in the conduit and due to the presence of lime scale in the water system;
generating a variable power radio frequency signal in response to said detected signals;
applying said radio frequency signal to the conduit at contact points spaced along the conduit, to transmit an electromagnetic field of variable intensity to the water.

12. A method according to Claim 11 further characterised in that the power of said radio frequency signal is controlled in direct relation to the turbulence due to the flow of water and amount of limescale in the system.

13. A method according to Claim 12 further characterised by converting the signal provided by said microphone into a series of pulses whose frequency is proportional to the frequency of the audio signal.

14. A method according to Claim 13 further characterised by converting the series of pulses to a voltage whose amplitude is related to the frequency of the pulses.

15. A method according to Claim 14 further characterised by converting the voltage to a variable frequency train of pulses.

16. A method according to Claim 14 or 15 further characterised by visually indicating the power of the radio frequency signal.

## Patentansprüche

1. Wasseraufbereitungsgerät für elektromagnetisches Behandeln von Wasser in einer Leitung, die einen Teil eines Wassersystems bildet, umfassend
eine oder mehrere Kästen, von denen zumindest einer mit einer Wasserleitung verbindbar ist;
ein Mittel zum Herstellen eines elektrischen Kontakts mit der Leitung an zwei oder mehr Kontaktpunkten, die räumlich voneinander getrennt entlang der Leitung angeordnet sind;
ein Mikrophon (1) zum Erfassen von Audiofrequenzsignalen aufgrund von Turbulenz des Wassers, das in der Leitung fließt, und aufgrund der Gegenwart von Kaltverkrustung in dem Wassersystem;
und einen Radiofrequenzsignalgenerator (2 bis 10) mit variabler Leistung und niedriger Impedanz, der in Antwort auf die erfaßten Signale betätigbar ist, um ein elektromagnetisches Feld variabler Intensität zu dem Wasser über besagte Kontaktpunkte zu übermitteln.

2. Wasseraufbereitungsgerät nach Anspruch 1, gekennzeichnet durch einen Filter (2), der, aus dem Signal, das von dem Mikrophon geliefert wird, Töne herausfiltert, die nicht im Zusammenhang stehen mit dem durch Turbulenz des Wassers in dem Kanal erzeugten Schall.

3. Wasseraufbereitungsgerät nach Anspruch 2, gekennzeichnet durch einen Verstärker (3) zum Verstärken des Signals von dem Filter in Vorbereitung für ein Impulsformen.

4. Wasseraufbereitungsgerät nach Anspruch 3, gekennzeichnet durch ein Impulsformnetzwerk und Differentiergerät (4) zum Konvertieren des Signals von dem Verstärker in einen Impulszug mit einer Frequenz, die im Zusammenhang steht mit der Frequenz des Signals.

5. Wasseraufbereitungsgerät nach Anspruch 4, gekennzeichnet durch einen monostabilen Schaltkreis (5) zum Konvertieren des Impulszugs variabler Frequenz in eine Rechteckwelle variabler Frequenz.

6. Wasseraufbereitungsgerät nach Anspruch 5, gekennzeichnet durch einen Mittelungsschaltkreis (6) zum Konvertieren des Rechteckwellensignals in eine Spannung, die im Zusammenhang steht mit der Frequenz des Rechteckwellensignals.

7. Wasseraufbereitungsgerät nach Anspruch 6, gekennzeichnet durch einen astabilen Schaltkreis (7) variabler Frequenz, um die Spannung von dem Mittelungsschaltkreis in einen Impulszug variabler Frequenz zu konvertieren.

8. Wasseraufbereitungsgerät nach Anspruch 7, gekennzeichnet durch eine Leistungsausgabestufe (8) zum Liefern eines sich verringernden Sinuswellensignalausgangs.

9. Wasseraufbereitungsgerät nach Anspruch 8, gekennzeichnet durch einen HF-Ausgabetransformator zum Liefern eines Ausgabesignals mit niedriger Spannung Und hohem Strom, um an die Leitung angelegt zu werden.

10. Wasseraufbereitungsgerät nach einem der Ansprüche 6 bis 9, gekennzeichnet durch ein Leistungsniveauanzeigegerät (11) das an den Mittelungsschaltkreis angeschlossen ist.

11. Verfahren zum elektromagnetischen Behandeln von Wasser in einer Leitung, die einen Teil eines Wassersystems bildet, umfassend
Erfassen von Audiofrequenzsignalen, mittels eines Mikrophons, aufgrund von Turbulenz des Wassers, das in der Leitung fließt, und aufgrund der Gegenwart von Kalkverkrustung in dem Wassersystem;
Erzeugen eines Radiofrequenzsignals variabler Leistung in Antwort auf die erfaßten Signale;
Anlegen besagten Radiofrequenzsignals an die Leitung an Kontaktpunkten, die räumlich getrennt voneinander entlang der Leitung angeordnet sind, um ein elektromagnetisches Feld variabler Intensität zu dem Wasser zu übermitteln.

12. Verfahren nach Anspruch 11, dadurch gekennzeichnet, daß die Leistung besagten Radiofrequenzsignals in direkter Beziehung zu der Turbulenz aufgrund des Wasserflusses und dem Ausmaß an Kalkablagerung in dem System gesteuert wird.

13. Verfahren nach Anspruch 12, gekennzeichnet durch Konvertieren des Signals, das von besagtem Mikrophon geliefert wird, in eine Reihe von Impulsen, deren Frequenz proportional zu der Frequenz des Audiosignals ist.

14. Verfahren nach Anspruch 13, gekennzeichnet durch Konvertieren der Reihe von Impulsen in eine Spannung, deren Amplitude im Zusammenhang steht mit der Frequenz der Impulse.

15. Verfahren nach Anspruch 14, gekennzeichnet durch Konvertieren der Spannung in einen Impulszug variabler Frequenz.

16. Verfahren nach Anspruch 14 oder 15, gekennzeichnet durch visuelle Anzeige der Leistung des Radiofrequenzsignals.

## Revendications

1. Appareil de traitement électromagnétique d'eau dans un conduit faisant partie d'un circuit de circulation d'eau, comprenant
un ou plusieurs boîtiers dont l'un au moins est destiné à être raccordé à un conduit d'eau,
un dispositif destiné à établir un contact électrique avec le conduit en au moins deux points de contact le long du conduit,
un microphone (1) destiné à détecter des signaux d'audiofréquences dus à la turbulence de l'eau qui s'écoule dans le conduit et à la présence de calcaire dans le circuit d'eau, et
un générateur (2-10) de signaux à hautes fréquences de puissance variable, avec une faible impédance, fonctionnant d'après les signaux détectés afin qu'il transmette un champ électromagnétique d'intensité variable à l'eau par l'intermédiaire des points de contact.

2. Appareil de traitement d'eau selon la revendication 1, caractérisé en outre par un filtre (2) qui, dans le signal transmis par le microphone, filtre les sons qui ne sont pas liés aux sons créés par la turbulence de l'eau dans le conduit.

3. Appareil de traitement d'eau selon la revendication 2, caractérisé en outre par un amplificateur (3) destiné à amplifier le signal du filtre avant la conformation des impulsions.

4. Appareil de traitement d'eau selon la revendication 3, caractérisé en outre par un réseau de conformation d'impulsions et un organe de différentiation (4) destinés à transformer le signal de l'amplificateur en un train d'impulsions dont la fréquence est liée à la fréquence du signal.

5. Appareil de traitement d'eau selon la revendication 4, caractérisé en outre par un circuit monostable (5) destiné à transformer le train d'impulsions à fréquence variable en une onde rectangulaire à fréquence variable.

6. Appareil de traitement d'eau selon la revendication 5, caractérisé en outre par un circuit (6) de formation de moyenne destiné à transformer le signal d'onde rectangulaire en une tension liée à la fréquence du signal d'onde rectangulaire.

7. Appareil de traitement d'eau selon la revendication 6, caractérisé en outre par un circuit astable (7) à fréquence variable, destiné à transformer la tension du circuit de formation de moyenne en un train d'impulsions de fréquence variable.

8. Appareil de traitement d'eau selon la revendication 7, caractérisé en outre par un étage (8) de sortie de puissance destiné à transmettre un signal de sortie sous forme sinusoïdale décroissante.

9. Appareil de traitement d'eau selon la revendication 8, caractérisé en outre par un transformateur de sortie à hautes fréquences, destiné à transmettre un signal de sortie à faible tension et d'intensité élevée destiné à être appliqué au conduit.

10. Appareil de traitement d'eau selon la revendication 6 ou tout autre revendication qui en dépend, caractérisé en outre par un indicateur de niveau de puissance (11) connecté au circuit de formation de moyenne.

11. Procédé de traitement électromagnétique d'eau dans un conduit faisant partie d'un circuit de circulation d'eau, comprenant
la détection, à l'aide d'un microphone, de signaux d'audiofréquences dus à la turbulence de l'eau circulant dans le conduit et à la présence de calcaire dans le circuit d'eau,
la création d'un signal à hautes fréquences de puissance variable en fonction des signaux détectés, et
l'application du signal à hautes fréquences au conduit en des points de contact espacés le long du conduit afin qu'un champ électrique d'intensité variable soit transmis à l'eau.

12. Procédé selon la revendication 11, caractérisé en outre en ce que la puissance du signal à hautes fréquences est réglée en relation directe avec la turbulence due à la circulation de l'eau et à la quantité de calcaire dans le circuit.

13. Procédé selon la revendication 12, caractérisé en outre par la transformation du signal donné par le microphone en une série d'impulsions dont la fréquence est proportionnelle à la fréquence du signal d'audiofréquences.

14. Procédé selon la revendication 13, caractérisé en outre par la transformation de la série d'impulsions en une tension dont l'amplitude est liée à la fréquence des impulsions.

15. Procédé selon la revendication 14, caractérisé en outre par la transformation de la tension en un train d'impulsions à fréquence variable.

16. Procédé selon la revendication 14 ou 15, caractérisé en outre par l'indication visuelle de la puissance du signal à hautes fréquences.
